# EUROPÄISCHE PATENTSCHRIFT

(11) **EP 3 808 547 B1**
(45) Veröffentlichungstag und Bekanntmachung des Hinweises auf die Patenterteilung: **14.08.2024**
(21) Anmeldenummer: 20201418.9
(22) Anmeldetag: 12.10.2020
(51) Int. Cl.: B29C 70/52, B29C 70/38, B29C 64/118

(54) **VERFAHREN UND WERKZEUGANORDNUNG ZUM HERSTELLEN EINER FASER-MATRIX-VERBUND-PROFIL-STRUKTUR UND FASER-MATRIX-VERBUND-PROFIL-STRUKTUR**
METHOD AND TOOL ARRANGEMENT FOR PRODUCING A FIBRE MATRIX COMPOSITE PROFILE STRUCTURE AND FIBRE MATRIX COMPOSITE PROFILE STRUCTURE
PROCÉDÉ ET AGENCEMENT D'OUTIL PERMETTANT DE FABRIQUER UNE STRUCTURE DE PROFILÉ COMPOSITE FIBRE-MATRICE ET STRUCTURE DE PROFILÉ COMPOSITE FIBRE-MATRICE

(30) Priorität: 14.10.2019 DE 102019127568
(43) Veröffentlichungstag der Anmeldung: 21.04.2021
(73) Patentinhaber: Universität Stuttgart, 70174 Stuttgart (DE); Deutsche Institute für Textil- und Faserforschung Denkendorf, 73770 Denkendorf (DE)
(72) Erfinder: MINDERMANN, Pascal, 73240 Wendlingen (DE); GRESSER, Götz Theodor, 70192 Stuttgart (DE); MILWICH, Markus, 73529 Bärenhöfe (DE)
(74) Vertreter: Ege Lee & Roider Patentanwälte

(56) Entgegenhaltungen:
- EP-A1- 3 315 296
- WO-A1-2018/117187
- JP-A- S5 722 016
- US-A- 4 347 287
- US-A1- 2018 257 266

## Beschreibung

Die Erfindung betrifft ein Verfahren zum Herstellen einer Faser-Matrix-Verbund-Profil-Struktur. Außerdem betrifft die Erfindung eine Werkzeuganordnung zum Herstellen einer Faser-Matrix-Verbund-Profil-Struktur.

Aus dem Dokument DE 10 2014 109 886 A1 ist ein Herstellverfahren zur Herstellung eines Faserverbundwerkstoff-Verbindungsabschnitts bekannt, wobei ein Faserumlenkelement vorgesehen wird und Langfasern entlang des Verbindungsabschnitts sowie das Faserumlenkelement in einer Schlaufe umschlingend angeordnet werden, wobei sich ein Befestigungsvorsprung ergibt und wobei das Faserumlenkelement nach Abschluss der Herstellung zumindest teilweise innerhalb des Verbindungsabschnitts verbleibt. Eine Langfaser wird in einer Schlaufe um eine Windung eines helixförmigen Faserumlenkelements abgelegt, wobei die Schlaufe insbesondere um eine Windung am Ende des helixförmigen Faserumlenkelements herum abgelegt wird, wobei während oder nach einem oder mehreren solcher Ablagevorgänge das helixförmige Faserumlenkelement relativ zu den bereits auf dem Faserumlenkelement abgelegten Langfasern gedreht wird, sodass ein mit Langfasern belegter Teil des Endes zur Ablage weiterer Langfasern frei wird, wobei insbesondere zumindest der Verbindungsabschnitt in Wickeltechnik hergestellt wird. Der Verbindungsabschnitt wird aus Rovings, einem oder mehreren Fasertapes oder/und einer oder mehreren Fasermatten und/oder einem oder mehreren Prepregs oder/und einem oder mehreren zumindest teilweise flexiblen oder flexibilisierten, vorzugsweise unidirektionalen Pultrusionselementen hergestellt, indem ein Ende der Rovings und/oder Fasertapes und/ oder Fasermatten und/oder Prepregs und/oder Pultrusionselemente um ein oder mehrere Faserumlenkelemente gelegt werden, wobei insbesondere um mehrere verschiedene Faserumlenkelemente gelegte Materialien abseits dieser Faserumlenkelemente schichtweise übereinander angeordnet werden.

Aus dem Dokument DE 10 2016 008 192 A1 ist ein Pultrusionsverfahren bekannt zur Herstellung eines thermoplastischen FVK-Hohlprofils in einer Pultrusionsanlage, bei welchem ein mehrlagiges Hohlprofilhalbzeug aus einer Vielzahl von Faser-Matrix-Halbzeugen, welche Verstärkungsfasern und thermoplastisches Matrixmaterial umfassen, innerhalb wenigstens einer Ablegevorrichtung der Pultrusionsanlage auf einem Trägerelement erzeugt, die Faser-Matrix-Halbzeuge erwärmt, und das Trägerelement mit dem Hohlprofilhalbzeug mittels einer Strangzieheinheit durch die Pultrusionsanlage gefördert wird, wobei als Trägerelement ein Kernrohr hergestellt wird, auf welchem das Hohlprofilhalbzeug mittels der Ablegevorrichtung durch die Faser-Matrix-Halbzeuge erzeugt wird, welche während des Erzeugens des mehrlagigen Hohlprofilhalbzeugs innerhalb der Ablegevorrichtung erwärmt werden.

Das Dokument EP 3 315 296 A1 betrifft eine Vorrichtung und ein Verfahren zur Pultrudieren eines gebogenen Profilteils aus thermoplastischem Verbundmaterial. Um mit dem gleichen Werkzeug ein gekrümmtes Verbundprofil mit zahlreichen Krümmungsmöglichkeiten herzustellen, wird in dem Dokument EP 3 315 296 A1 vorgeschlagen, in einer Imprägniereinheit Fasern in ihrem gesamten Abschnitt mit einem Harz zu benetzen und ein Zwischenverbundmaterial zu bilden, das mithilfe von zwei robotergeführten Greifern in wiederholter hin- und hergehender Bewegung gezogen wird und zu einem Formteil mit variabler Krümmung geformt wird. Die Krümmung wird durch die auf der Ebene eines Formgebungs- und Härtungswerkzeugs aufgebrachte Kühlung eingefroren.

Das Dokument US 4,347,287 A betrifft ein System und ein Verfahren zum Bilden einer segmentierten pultrudierten Form Faserverstärkungen und einem Matrixmaterial in kontinuierlicher Länge mit abwechselnd gehärteten und ungehärteten Abschnitten. Ein Härten der gehärteten Abschnitte erfolgt in einer Düse, zum Herstellen der gehärteten Abschnitte werden die Faserverstärkungen langsam durch die Düse gezogen. Zum Herstellen der ungehärteten Abschnitte werden die Faserverstärkungen schnell durch die Düse gezogen, sodass an den ungehärteten Abschnitten das Matrixmaterial ungehärtet bleibt. An den ungehärteten Abschnitten wird die Form gefaltet oder gebogen, um Verbindungen zu bilden. Nach Bedarf wird auf die ungehärteten Abschnitte an den Verbindungen Harz aufgetragen und an Ort und Stelle ausgehärtet, um die erforderliche Steifigkeit und Stabilität bereitzustellen, oder die Abschnitte können ungehärtet gelassen werden.

Das Dokument US 2018/0257266 A1 betrifft ein Verfahren zum Bilden einer dreidimensionalen Struktur mit sich kreuzenden Plattenelementen, die eine Vielzahl von Öffnungen definieren. Bei dem Verfahren aus dem Dokument US 2018/0257266 A1 wird ein Filament mit einem härtbaren Harz beschichten und sich kreuzend in mehreren Schichten um eine Vielzahl von Stiften geführt, wobei ein Filamentstapel gebildet wird. Dann wird das Harz ausgehärtet, sodass die einzelnen Filamentschichten, die den Filamentstapel bilden, eine dreidimensionale Form beibehalten.

Der Erfindung liegt die Aufgabe zugrunde, ein eingangs genanntes Verfahren zu verbessern. Außerdem liegt der Erfindung die Aufgabe zugrunde, eine eingangs genannte Werkzeuganordnung strukturell und/oder funktionell zu verbessern.

Die Aufgabe wird gelöst mit einem Verfahren mit den Merkmalen des Anspruchs 1. Außerdem wird die Aufgabe gelöst mit einer Werkzeuganordnung mit den Merkmalen des Anspruchs 10. Vorteilhafte Ausführungen und/oder Weiterbildungen sind Gegenstand der abhängigen Ansprüche.

Das Verfahren umfasst ein Herstellen des Verbundprofilstrangs. Das Verfahren umfasst ein Herstellen einer Struktur aus dem Verbundprofilstrang. Das Verfahren kann ein Pultrusionsverfahren sein. Das Verfahren kann ein Wickelverfahren sein. Das Verfahren kann ein kombiniertes Pultrusions-Wickel-Verfahren sein. Das Verfahren kann ein kontinuierliches Herstellungsverfahren sein. Das Verfahren kann automatisiert durchführbar sein.

Die Verstärkungsfasern können organische Fasern, wie Aramidfasern, Carbonfasern, Polyester-Fasern, Nylon-Fasern, Polyethylen-Fasern, Plexiglas-Fasern, und/oder anorganische Fasern, wie Basaltfasern, Borfasern, Glasfasern, Metallfasern, Keramikfasern, Kieselsäurefasern, sein. Die Verstärkungsfasern können Naturfasern, wie Flachsfasern, Hanffasern, Holzfasern oder Sisalfasern sein. Die Fasern können Langfasern oder Endlosfasern sein. Die Fasern können als Single-End oder Multi-End vorliegen.

Das Matrixmaterial ist von einem unausgehärteten Zustand in einen ausgehärteten Zustand überführbar. In dem unausgehärteten Zustand kann das Matrixmaterial fließfähig sein. In dem unausgehärteten Zustand kann das Matrixmaterial flüssig sein. In dem unausgehärteten Zustand kann das Matrixmaterial zum Imprägnieren von Verstärkungsfasern geeignet sein. Das Matrixmaterial kann einen teilgehärteten Übergangsbereich aufweisen. In dem ausgehärteten Zustand kann das Matrixmaterial fest sein. In dem ausgehärteten Zustand kann das Matrixmaterial zumindest hinreichend fest sein, um weitere Schritte, insbesondere den zweiten Schritt, durchzuführen. In dem ausgehärteten Zustand kann das Matrixmaterial mit dem Fasermaterial einen Verbund eingehen. In dem ausgehärteten Zustand kann das Matrixmaterial lastabtragend sein.

Das Matrixmaterial kann ein Kunststoff sein. Das Matrixmaterial kann thermoplastisch sein. Das Matrixmaterial kann Polyetheretherketon (PEEK), Polyphenylensulfid (PPS), Polysulfon (PSU), Polyetherimid (PEI), Polytetrafluorethen (PTFE), Polylactid (PLA), Polypropylen (PP), Polyethylen (PE) und/oder Polyamid (PA) aufweisen. Das Matrixmaterial kann duroplastisch sein. Das Matrixmaterial kann Epoxidharz (EP), ungesättigtes Polyesterharz (UP), Vinylesterharz (VE), Phenol-Formaldehydharz (PF), Diallylphthalatharz(DAP), Methacrylatharz (MMA), Polyurethan (PUR) und/oder Aminoharze, wie Melaminharz (MF/MP) oder Harnstoffharz (UF), aufweisen. Das Matrixmaterial kann ein Präpolymer sein. Das Material kann Caprolactam aufweisen. Das Matrixmaterial kann Beschleuniger, Verzögerer, Sensitizer und/oder weitere Zuschlagstoffe aufweisen.

Das Matrixmaterial kann wenigstens einen Härter aufweisen. Das Matrixmaterial kann einen ersten Härter und einen zweiten Härter aufweisen. Der erste Härter kann mithilfe von elektromagnetischer Strahlung, insbesondere ultravioletter Strahlung (UV) oder Mikrowellenstrahlung und/oder Partikelstrahlung, insbesondere Elektronenstrahlung, aktivierbar sein. Der zweite Härter kann thermisch aktivierbar sein. Das Matrixmaterial kann wenigstens einen Zusatzstoff aufweisen. Das Matrixmaterial kann einen UV-Initiator, wie Bis(2,4,6-trimethylbenzoyl)-phenylphosphineoxide, und einen Härter, wie tert-Butylperoxybenzoat, aufweisen. Die Vernetzung kann als radikalische Polymerisation und/oder lebende Polymerisation ablaufen.

Anfänglich können die Verstärkungsfasern als Halbzeug, trocken, beisielsweise peripher trocken, und/oder lokal in einem Materialspeicher vorliegen. In dem ersten Schritt können zunächst die Verstärkungsfasern mit unausgehärtetem Matrixmaterial imprägniert werden. Alternativ können die Verstärkungsfasern bereits vorimpägniert als Prepregs vorliegen. Nachfolgend kann das Matrixmaterial lediglich abschnittsweise ausgehärtet und/oder plastifiziert werden, um den wenigstens einen ersten Strangabschnitt und den wenigsten einen zweiten Strangabschnitt zu erzeugen.

Der wenigstens eine erste Strangabschnitte weist ausgehärtetes Matrixmaterial auf. Der wenigstens eine erste Strangabschnitte kann unausgehärtetes oder unvollständig ausgehärtetes Matrixmaterial aufweisen. Der wenigstens eine zweite Strangabschnitte weist unausgehärtetes, unvollständig ausgehärtetes und/oder nur oberflächlich ausgehärtetes Matrixmaterial auf.

Der Verbundprofilstrang kann mehrere erste Strangabschnitte und mehrere zweite Strangabschnitte aufweisen. Der Verbundprofilstrang kann eine Stranglängsachse aufweisen. Die ersten Strangabschnitte und die zweiten Strangabschnitte können entlang der Stranglängsachse abwechselnd angeordnet sein. Jeder Strangabschnitt kann in Erstreckungsrichtung der Stranglängsachse eine vorgegebene Länge aufweisen.

Der Verbundprofilstrang kann wenigstens einen zwischen dem wenigsten einen ersten Strangabschnitt und dem wenigstens einen zweiten Strangabschnitt angeordneten Übergangsbereich aufweisen. In dem wenigstens einen Übergangsbereich können ausgehärtetes Matrixmaterial und unvollständig ausgehärtetes Matrixmaterial ineinander übergehen. Angestrebt werden kann ein möglichst kurzer Übergangsbereich.

Der Verbundprofilstrang wird in dem zweiten Schritt an dem wenigstens einen zweiten Strangabschnitt gebogen. In dem ersten und/oder zweiten Schritt kann der erste Härter aktiviert werden. In einem dritten Schritt wird das Matrixmaterial des wenigstens einen zweiten Strangabschnitts ausgehärtet. In dem dritten Schritt kann der zweite Härter aktiviert werden. Der erste Schritt und der zweite Schritt werden gleichzeitig durchgeführt. Der erste Schritt, der zweite Schritt und der dritte Schritt werden in der angegebenen Reihenfolge durchgeführt. Zwischen dem zweiten Schritt und dem dritten Schritt können Korrekturen, wie Änderung einer Position, einer Spannung, eines Harzgehalts oder Ähnlichem, vorgenommen werden. Vor, zwischen, während und/oder nach diesen Schritten können weitere Schritte durchgeführt werden.

Der erste Schritt und der zweite Schritt werden aufeinander abgestimmt durchgeführt. Eine Faserablage und eine lokale Aushärtung können aufeinander abgestimmt durchgeführt werden. Der erste Schritt und der zweite Schritt werden synchronisiert durchgeführt. Der Faserablage und die lokale Aushärtung können synchronisiert durchgeführt werden.

Das Verfahren wird mithilfe eines ersten Werkzeugmoduls und eines zweiten Werkzeugmoduls durchgeführt. Das erste Werkzeugmodul und das zweite Werkzeugmodul werden dabei synchronisiert relativ zueinander bewegt. Das erste Werkzeugmodul kann dabei relativ zu dem zweiten Werkzeugmodul bewegt werden. Das zweite Werkzeugmodul kann dabei relativ zu dem ersten Werkzeugmodul bewegt werden. Das erste Werkzeugmodul und das zweite Werkzeugmodul können relativ zueinander bewegt werden, um den Verbundprofilstrang von dem ersten Werkzeugmodul abzuziehen und/oder den Verbundprofilstrang umzuformen. Das erste Werkzeugmodul und/oder das zweite Werkzeugmodul können/kann mithilfe eines Roboters bewegt werden.

Das erste Werkzeugmodul und/oder das zweite Werkzeugmodul können/kann entlang einer vorgegebenen Trajektorie bewegt werden. Die Trajektorie kann wenigstens einen ersten Trajektorienabschnitt und wenigstens einen zweiten Trajektorienabschnitt aufweisen. Der wenigstens eine erste Trajektorienabschnitt kann dem wenigstens einen ersten Strangabschnitt zugeordnet sein. Der wenigstens eine zweite Trajektorienabschnitt kann dem wenigstens einen zweiten Strangabschnitt zugeordnet sein. Der wenigstens eine erste Trajektorienabschnitt und der wenigstens eine zweite Trajektorienabschnitt können derart durchgeführt werden, dass sich ein flüssiger Bewegungsablauf ergibt. Der wenigstens eine erste Trajektorienabschnitt kann zumindest annähernd gerade sein. Der wenigstens eine erste Trajektorienabschnitt kann vorwiegend dazu dienen, den Verbundprofilstrang aus dem ersten Werkzeugmodul abzuziehen. Der wenigstens eine zweite Trajektorienabschnitt kann zumindest annähernd gekrümmt sein, beispielsweise bogenförmig oder spiralförmig. Der wenigstens eine zweite Trajektorienabschnitt kann vorwiegend dazu dienen, einen bereits abgezogenen Verbundprofilstrang zu positionieren und/oder umzulenken.

Der wenigstens eine erste Trajektorienabschnitt und der wenigstens eine zweite Trajektorienabschnitt können ineinander übergehen und/oder gleichzeitig durchgeführt werden. Der wenigstens eine erste Trajektorienabschnitt und der wenigstens eine zweite Trajektorienabschnitt können zumindest abschnittsweise überlagert und somit zumindest abschnittsweise gleichzeitig durchgeführt werden.

In dem ersten Schritt kann der Verbundprofilstrang entlang einer Austrittsachse aus dem ersten Werkzeugmodul austreten. Die Austrittsachse kann einer Mittelachse des ersten Werkzeugmoduls entsprechen. In dem zweiten Schritt wird der Verbundprofilstrang an einem Kontaktpunkt des zweiten Werkzeugmoduls in dem wenigstens einen zweiten Strangabschnitt umgelenkt. Mit dem Umlenken kann primär eine Winkelrichtungsänderung verbunden sein. Mit dem Umlenken kann auch ein Umformen verbunden sein. Der Kontaktpunkt kann sich mit dem Umlenken ändern. Während dem Durchführen des zweiten Schritts können die Austrittsachse und der letzte Kontaktpunkt zumindest annähernd in Übereinstimmung gehalten werden. Die Austrittsachse und die Mittelachse des ersten Werkzeugmoduls können in Übereinstimmung gehalten werden.

Während dem Durchführen des ersten Schritts kann dem Verbundprofilstrang wenigstens ein faserartiges Zusatzelement zugeführt werden. Das wenigstens eine Zusatzelement kann ein faseroptischer Sensor oder ein Draht sein. Das wenigstens eine Zusatzelement kann dem gesamten Verbundprofilstrang oder dem Verbundprofilstrang abschnittsweise zugeführt werden.

Das Matrixmaterial kann mithilfe von Strahlung, insbesondere UV-Strahlung und/oder Wärmestrahlung, ausgehärtet werden.

Während dem Durchführen des dritten Schritts wird der Verbundprofilstrang an dem zweiten Werkzeugmodul fixiert, beispielsweise mithilfe eines Klebebands.

Das erste Werkzeugmodul und das zweite Werkzeugmodul können strukturell voneinander gesondert sein. Das erste Werkzeugmodul und das zweite Werkzeugmodul wirken funktionell zusammen. Das erste Werkzeugmodul und das zweite Werkzeugmodul können mit einem Freiheitsgrad *f* ≥ 2, insbesondere *f* = 2, *f* = 3 oder *f* = 6, relativ zueinander bewegbar sein. Die Werkzeuganordnung kann wenigstens ein weiteres Werkzeugmodul aufweisen. Das wenigstens eine weitere Werkzeugmodul kann zum Durchführen des dritten Schritts dienen.

Die Werkzeuganordnung kann wenigstens einen Roboter zum Bewegen des ersten Werkzeugmodul und/oder des zweiten Werkzeugmoduls aufweisen. Die Werkzeuganordnung kann eine Kontrollvorrichtung zum Kontrollieren des ersten Werkzeugmodul und des ersten Werkzeugmoduls, des zweiten Werkzeugmoduls, des wenigstens einen Roboters und/oder des wenigstens einen weiteren Werkzeugmoduls aufweisen. Die Kontrollvorrichtung kann einen Computer, wenigstens eine Datenschnittstelle und/oder wenigstens einen Datenspeicher aufweisen. Die Kontrollvorrichtung kann zum regelungstechnischen und/oder steuerungstechnischen Kontrollieren dienen. Die Kontrollvorrichtung kann mehrere Kontrollmodule aufweisen.

Das erste Werkzeugmodul kann einen Materialspeicher für Verstärkungsfasern aufweisen. Das erste Werkzeugmodul kann eine Zuführvorrichtung für Verstärkungsfasern aufweisen. Das erste Werkzeugmodul kann einen Materialspeicher für Matrixmaterial aufweisen. Das erste Werkzeugmodul kann einen Materialspeicher für Zusatzmaterial aufweisen. Das erste Werkzeugmodul kann eine Zuführvorrichtung für Matrixmaterial aufweisen. Das erste Werkzeugmodul kann eine Zuführvorrichtung für Zusatzmaterial aufweisen. Das erste Werkzeugmodul kann eine Imprägniervorrichtung zum Imprägnieren der Verstärkungsfasern mit Matrixmaterial aufweisen. Das erste Werkzeugmodul kann eine Zuführvorrichtung für imprägnierte Verstärkungsfasern aufweisen.

Das erste Werkzeugmodul kann eine Aushärtevorrichtung aufweisen. Die Aushärtevorrichtung kann zum abschnittsweisen Aushärten von Matrixmaterial dienen. Die Aushärtevorrichtung kann wenigstens eine Strahlungsquelle für Strahlung, insbesondere UV-Strahlung oder Wärmestrahlung, aufweisen. Das erste Werkzeugmodul kann eine Abschattungsvorrichtung aufweisen. Die Abschattungsvorrichtung kann funktionell und/oder strukturell gesondert ausgeführt sein. Die Abschattungsvorrichtung kann funktionell und/oder strukturell integriert sein. Bereits vorhandene Bauteile der ersten Werkzeugeinrichtung können als Abschattungsvorrichtung dienen. Die Abschattungsvorrichtung kann dazu dienen, eine Strahlung der wenigstens einen Strahlungsquelle auf einen vorgegebenen Arbeitsbereich zu begrenzen und/oder zu lenken. Das erste Werkzeugmodul weist wenigstens eine Formvorrichtung auf. Die wenigstens eine Formvorrichtung kann dazu dienen, einen Querschnitt des Verbundprofilstrangs zu formen. Die wenigstens eine Formvorrichtung kann eine runde, eckige oder anders geformte Öffnung aufweisen. Die wenigstens eine Formvorrichtung kann zum Luftabschluss dienen. Die wenigstens eine Formvorrichtung kann für Strahlung, insbesondere UV-Strahlung oder Wärmestrahlung, durchlässig sein.

Das zweite Werkzeugmodul kann einen Basisabschnitt aufweisen. Der Basisabschnitt kann zur Faserablage direkt genutzt werden oder Umlenkelemente in Position halten oder beides ermöglichen. Das zweite Werkzeugmodul weist wenigstens einen Umlenkabschnitt auf. Der wenigstens eine Umlenkabschnitt kann ein Umlenkpunkt sein. Der wenigstens eine Umlenkabschnitt kann an dem Basisabschnitt angeordnet sein. Das zweite Werkzeugmodul kann mehrere Umlenkabschnitte aufweisen. Die Umlenkabschnitte können eine vorgegebene Anordnung und/oder vorgegebene Ausrichtungen aufweisen. Der wenigstens eine Umlenkabschnitt kann hülsenförmig, stiftförmig oder hakenförmig ausgeführt sein. Der wenigstens eine Umlenkabschnitt kann endseitig eine Verbreiterung aufweisen. Die Faser-Matrix-Verbund-Profil-Struktur kann nach einer Formgebung von dem wenigstens einen Umlenkabschnitt abnehmbar sein. Der wenigstens eine Umlenkabschnitt kann zerstörend, insbesondere durch Herauslösen, beispielsweise mithilfe eines flüssigen Lösungsmittels, wie Wasser, oder Herausbrechen, oder zerstörungsfrei entfernbar sein. Der wenigstens eine Umlenkabschnitt kann in der Faser-Matrix-Verbund-Profil-Struktur verbleiben.

Die Faser-Matrix-Verbund-Profil-Struktur kann eine hochfeste oder ultrahochfeste Struktur sein. Die Faser-Matrix-Verbund-Profil-Struktur kann eine steife Struktur sein. Die Faser-Matrix-Verbund-Profil-Struktur kann ein Bauteil sein. Die Faser-Matrix-Verbund-Profil-Struktur kann flächig, voluminös oder fachwerkartig sein. Die Faser-Matrix-Verbund-Profil-Struktur kann eine Fertigungs- oder Fügehilfe sein. Die Faser-Matrix-Verbund-Profil-Struktur kann ein Zwischenprodukt oder ein Endprodukt sein. Die Faser-Matrix-Verbund-Profil-Struktur kann ein Stabtragwerk sein. Die Faser-Matrix-Verbund-Profil-Struktur kann zur Verwendung im Maschinenbau, in der Fahrzeugtechnik, in der Luft- und Raumfahrttechnik, in der Prothetik, im Sportbereich, im Möbelwesen, in der Medizintechnik und/oder im Bauwesen dienen. Die Faser-Matrix-Verbund-Profil-Struktur kann beispielsweise in folgenden Produkten verwendet werden: Halterungen für Antennen für Kommunikationssatelliten, Primärstrukturen für Satelliten, Segmente von faltbaren Satellitenmasten, Halterung von Fahrzeugspoilern, medizinische Prothesen, Halterung von Außenspiegeln, Halterung für Feuerlöscher, Flaschenhalterung für Fahrräder, Streben und Stangen im Fahrzeug, Flügelinnenstruktur für Kleinflugzeuge, Fahrradspeichen, Winkelverbinder für Aluminiumprofile, Sitzhocker, Strommasten / Funkmasten, Brückenverstrebungen, Geländer und Railings.

Die Faser-Matrix-Verbund-Profil-Struktur kann einen Verbundprofilstrang mit wenigstens einem zumindest annähernd geraden ersten Strangabschnitt und wenigstens einem zumindest annähernd gekrümmten zweiten Strangabschnitt aufweisen. Der wenigstens eine zumindest annähernd gerade Strangabschnitt kann in dem ersten Schritt als erster Strangabschnitt hergestellt sein. Der wenigstens eine zumindest annähernd gekrümmte Strangabschnitt kann in dem ersten Schritt als zweiter Strangabschnitt hergestellt und in dem zweiten Schritt umgelenkt sein.

Die Faser-Matrix-Verbund-Profil-Struktur kann wenigstens einen Knotenabschnitt aufweisen. Die Faser-Matrix-Verbund-Profil-Struktur kann wenigstens einen Stababschnitt aufweisen. Der wenigstens eine Knotenabschnitt kann dazu dienen, Stababschnitte miteinander zu verbinden. Der wenigstens eine Knotenabschnitt kann dazu dienen, Kraftkomponenten von Stababschnitt zu Stababschnitt zu leiten. Der wenigstens eine Knotenabschnitt kann ein technisch-mechanischer Knoten sein. Der wenigstens eine Stababschnitt kann ein technisch-mechanischer Stab sein. Der wenigstens eine Knotenabschnitt kann ein Abschnitt lediglich mit Richtungsänderung sein. Der wenigstens eine Knotenabschnitt muss keine Umwicklung oder Umschlingung aufweisen. Der wenigstens eine Knotenabschnitt kann eine Torsion entlang der Strangsachse aufweisen.

Der wenigstens eine Knotenabschnitt kann eine Krümmung, eine Kreuzung, eine Überlappung, eine Verdrehung oder eine Verzweigung des Verbundprofilstrangs umfassen. Der wenigstens eine Knotenabschnitt kann mithilfe wenigstens eines zweiten Strangabschnitts gebildet sein.

Zusammenfassend und mit anderen Worten dargestellt ergibt sich somit durch die Erfindung unter anderem ein Verfahren und eine Anlage zum Pultrusionswickeln.

Beim Pultrusionswickeln kann die Aushärtung des Matrixmaterials mittels Strahlung, insbesondere im UV-Spektrum, in einem ausreichend kalten Werkzeug erfolgen. Dies ermöglicht es, eine Härtung in bestimmten Bereichen des Faserstranges, die vorliegend auch als zweite Strangabschnitte bezeichnet werden, zu unterbrechen. Zunächst können faserförmige Halbzeuge, die vorliegend auch als Verstärkungsfasern bezeichnet werden, mit Matrixmaterial imprägniert, durch ein formgebendes Werkzeug gezogen und dort intermittierend ausgehärtet werden. Im Folgenden können die imprägnierten Verstärkungsfasern nach dem Werkzeugaustritt, die dann vorliegend auch als Verbundprofilstrang bezeichnet werden, auf eine Wickelvorrichtung, die vorliegend auch als zweites Werkzeugmodul bezeichnet wird, abgezogen und um Umlenkstiften bzw. Wickelhülsen gewickelt werden. Der Prozess kann dabei so kontrolliert werden, dass ausgehärtete Abschnitte, die vorliegend auch als erste Strangabschnitte bezeichnet werden, mit definierter Querschnittsgeometrie in den freien Lauflängen zwischen den Wickelhülsen gespannt sind, während die nicht vollständig gehärteten Zonen des Verbundprofilstrang, die zweiten Strangabschnitte, noch genügend flexibel sein können, um sich um die Wickelelemente legen zu können. Erfordert also das Folgen des Ablagepfades eine nennenswerte Krümmung des Verbundprofilstrangs, so kann dieser abschnittsweise (zweite Strangabschnitte) vorübergehend nicht ausgehärtet sein. Die zweiten Strangabschnitte können auch an weiteren Krümmungs-, Kreuzungs-, Überlappungs-, Verdrehungs- und Verzweigungspunkten vorgesehen sein und dort bei Kontakt für eine bessere Verklebung zwischen den einzelnen Strangabschnitte sorgen. Nach der Formgebung können die noch nicht vollständig vernetzten Bereiche nachträglich gehärtet werden. Nach der vollständigen Aushärtung aller Abschnitte kann das zweite Werkzeugmodul vollständig oder teilweise entfernt oder aufgelöst werden. In den ersten Strangabschnitten des Verbundprofilstrangs kann die Außenkontur durch die Werkzeuginnengeometrie willkürlich festgelegt werden.

In einem Werkzeugkopf, der vorliegend auch als erstes Werkzeugmodul bezeichnet wird, kann der Verbundprofilstrang abschnittsweise vorrangig mittels UV-Strahlung aushärten werden, aber beispielsweise auch eine Aushärtung durch Wärmeleitung unter Verwendung von mechanisch beweglichen Formwerkzeugen oder eine Aushärtung durch Strahlung mit anderer Wellenlänge ist möglich. Im Falle einer Aushärtung über Strahlung kann ein Werkzeug so ausgestaltet sein, dass es für das entsprechende Spektrum durchlässig ist. Ein Ende des Verbundprofilstrangs kann an der Wickelvorrichtung befestigt werden. Ein ausgehärteter Bereich (erster Strangabschnitt) am Ende des Verbundprofilstrangs kann dazu besser geeignet sein. Der Verbundprofilstrang kann durch relative Bewegung zwischen Wickelvorrichtung und dem Form-Werkzeugkopf durch das Werkzeug gezogen werden. Hierbei kann eines von beiden stationär sein und das andere (oder ggf. beide Teile) bewegt werden, bspw. händisch, durch einen 6-Achs-Roboter, Portalkinematik oder eine Achskinematik. Optional ist es möglich im Prozess faserähnliche Objekte, z.B. faseroptische Sensoren oder Drähte, vor oder hinter dem Imprägnierungsschritt einzubinden und mitlaufen zu lassen, um diese im Bauteil, das vorliegend auch als Faser-Matrix-Verbund-Profil-Struktur bezeichnet wird, zu integrieren. Der Werkzeugkopf kann neben den bereits beschriebenen Teilen auch einen Materialspeicher für Verstärkungsfasern aufweisen, welche - bei externer Lagerung der Fasern - auch als Faser-Zuführungen gestaltet werden können. Weiterer Bestandteil der Anlage können eine oder mehrere Imprägnierungskammern sein, die optional mit einer Mischeinheit sowie einer Zuführung für das Matrixmaterial oder dessen Einzelbestandteile ausgestattet sein können. Zugeführtes Material kann neben Fasermaterial und Matrix, in getrennter Form, auch Tow-Pregs und/oder PrePregs sein und/oder das zugeführte Material kann über einen Bi-Stage-Zustand verfügen. Falls mit UV-Strahlung ausgehärtet werden soll, kann sich im Werkzeugkopf eine UV-Quelle mit ggf. Spiegel- oder Lichtleitungs- sowie Abschattungselementen befinden. Die Lichtleitungselemente, funktional zugehörig zu den Abschattungselementen, können zur Bündelung von Strahlungsenergie auf einen möglichst kleinen Werkzeugabschnitt dienen. So kann zudem die Strahlungsquelle von einem Tool-Center-Point (TCP) weiter entfernt verbaut werden, um das Ende des Werkzeugkopfes möglichst schmal zu halten. Die Länge der Aushärtungszone kann die Schärfe von Übergängen zwischen einem ersten Strangabschnitt und einem zweiten Strangabschnitt im Verbundprofilstrang bestimmen und kann möglichst kurz sein. Abschattungselemente können zum Schutz eines Bedieners dienen und ein Aushärten der Matrix an Stellen verhindern, an denen dies nicht gewünscht ist, z.B. in der Imprägnierungskammer. Der Arbeitsbereich kann über eine Absaugung verfügen.

Beim Ablegen bzw. dem Wickeln des Faserstrangs kann aufgrund der teilgehärteten ersten Strangabschnitte und der Größe des Werkzeugs eine Anpassung der Wickeltrajektorien erforderlich sein. Ein Punkt, an dem der Verbundprofilstrang auf der Wickelvorrichtung abgelegt wird, kann deutlich (z.B. üblicherweise einige cm) hinter einem Austritt des ersten Werkzeugmoduls liegen und kann als virtueller TCP angesehen werden. Damit kann eine sonst einschränkende Interaktion zwischen Wickelkopf und Wickelvorrichtung umgangen werden. Es kann eine Wickelbewegung durchgeführt werden, bei der eine Austrittsachse des ersten Werkzeugmoduls stets auf den letzten Wickelpunkt zeigt und jedwede Rotation zwischen Verbundprofilstrang und erstem Werkzeugmoduls vermieden wird, dies gilt besonders während translatorischen Bewegungen. Resultat kann eine Trennung zwischen Phasen, bei denen der Verbundprofilstrang hauptsächlich entlang einer ungekrümmten Trajektorie abgezogen wird und Phasen, in denen der Verbundprofilstrang, welcher sich zwischen dem letzten Wickelpunkt und dem Austritt des ersten Werkzeugmoduls befindet, auf der Wickelvorrichtung positioniert wird, sein. So können während ungekrümmten TCP-Pfaden die teil-/ausgehärteten Faserstränge unverbogen hergestellt werden. Es soll mit möglichst konstanter Spannung gewickelt werden, weshalb der TCP während der Positionierungsphase eine Trajektorie auf einem Großkreis einer Kugeloberfläche beschreiben kann. Der Mittelpunkt dieser Kugel kann im Kontaktpunkt zwischen Verbundprofilstrang und dem letzten Umlenkpunkt liegen und der Radius der Kugel kann zeitlich gesehen entsprechend anwachsen, um eine vorgegebene Abzugsgeschwindigkeit zu gewährleisten. Die Geschwindigkeit des TCPs kann während der Positionierungsphase höher als in der Abzugsphase sein. Je nach Bauteilgeometrie und verfügbarem Arbeitsvolumen können beide Phasen ineinander übergehen und ihre Charakteristiken verschmieren, um die Trajektorie zu glätten. Ein weiterer Vorteil ist eine reduzierte Reibung zwischen Werkzeugkopf und Verbundprofilstrang. Die Bewegungstrajektorie zur Bauteilformgebung soll mit der intermittierenden Aushärtung im Werkzeug synchronisiert sein. Ein weiterer Vorteil ist, dass durch diese Wickeltechnik Relativbewegungen zwischen Fasermaterial und Wickelpinoberfläche vermieden werden, sodass, falls diese nennenswert rau sein sollte, Beschädigung der Filamente vermieden werden. Somit ist es möglich, auch auf sehr rauen Oberflächen zu wickeln ohne das Fasern nennenswert bei der Ablage beschädigt werden. Falls die beschriebene Faserstrang-Anlegemethode der Erstellung der Trajektorien auf konventionelle Wickelmethoden angewendet wird, ergeben sich ebenfalls die beschriebenen Vorteile.

Die Wickelvorrichtung kann mehrere Faserführungselemente, die vorliegend auch als Umlenkabschnitte bezeichnet werden, aufweisen, welche z.B. als Wickelpunkte mit Pinnen, Hülsen, Haken oder als Vertiefungen ausgeführt sein können. Die hergestellten Faserverbundkomponenten können nach der Formgebung von der Wickelvorrichtung abgenommen werden. Die Wickelvorrichtung kann zerstörend (z.B. wasserlöslich oder durch Herausbrechen) oder zerstörungsfrei (z.B. durch Falten oder Schraubverbindungen) entfernt werden oder die Wickelvorrichtung kann Teil des fertigen Bauteils sein.

Ein wesentlicher Aspekt der Erfindung kann in der Zusammenführung der intermittierenden UV-Pultrusion mit der "kernlosen" Wickeltechnologie sowie in der einhergehenden Prozess- und Maschinenentwicklung und der dazu notwendigen, neuartigen Faserstrang-Ablagemethode gesehen werden.

Ziel der Erfindung ist es, die Qualität, die Maßhaltigkeit und/oder die Bestimmung der Querschnittsabmessungen von erzeugten Wickelstrukturen zu verbessern, um hauptsächlich diese besser computergestützt berechnen und diese ohne Investitionskosten für bauteilspezifische Formwerkzeuge fertigen zu können. Dazu kann eine direkte Konsolidierung beim Ablegen des Verbundmaterials erfolgen. In einem formgebenden Werkzeug kann Druck auf den Verbundprofilstrang ausgeübt werden, während durch einen weiteren Energieeintrag (z.B. UV-Strahlung) ein Vernetzen (Aushärtung) des Matrixmaterials und somit des Verbundprofilstrangs ausgelöst werden kann. Durch Schalten dieser Energiequelle in Verbindung mit dem ausreichend kalt bleibenden Werkzeug ist es möglich, Stäbe herzustellen, welche gehärtete (erste Strangabschnitte) und nicht gehärtete Bereiche (zweite Strangabschnitte) aufweisen. An den nicht gehärteten Bereichen kann eine schädigungsfreie Umlenkung, z.B. an einem Wickel- oder Kreuzungspunkt, vorliegend auch als Umlenkabschnitt bezeichnet, stattfinden. Nach der Formgebung mithilfe der Wickelvorrichtung können die nicht ausgehärteten Bereiche je nach Matrixmaterial mit UV oder thermisch nachgehärtet werden. Dazu kann die Struktur auf der Wickelvorrichtung beispielsweise mit Klebeband fixiert werden, um sie unter Spannung zu halten und dann in einem Ofen beim Tempern auszuhärten. Der Verbundprofilstrang kann durch die Werkzeugvorrichtung gezogen werden allein aufgrund einer Relativbewegung zwischen Werkzeugkopf und Wickelvorrichtung. Aktive Vorschubvorrichtungen können entfallen.

Mit der Erfindung können die Vorteile der wirtschaftlichen Pultrusion mit der sehr flexiblen Wickeltechnik zum neuen "Pultrusionswickeln" kombiniert werden. Damit können ultrahochfeste Faserverbundbauteile - insbesondere Stabtragwerke - hergestellt werden. Faserstränge können integral mit geometrisch definiertem Querschnitt und ohne die Verwendung eines Ablagekerns erzeugt werden. Durch die integrale Bauweise, wird der Kraftfluss entlang der Fasern nicht unterbrochen. Der Strangquerschnitt kann definiert eingestellt werden, sodass die Bauteile insbesondere im Automobil, der Luft- und Raumfahrt und in der Architektur auslegbar eingesetzt werden können. Eine Steigerung des Strangdurchmessers auf Abmessung jenseits von 10mm, wenn auch nur mit einer oberflächlichen formstabilen Härtung, sowie eine Formgebung von rechteckigen, hohlen, H- oder T-förmigen Querschnitten eröffnet breitere Anwendungen im Bauwesen. Die direkte Formgebung verhindert das sonst typische Abflachen der Faserstränge während der Ablage, welches sonst mit einer Abnahme des Flächenmomentes einhergeht und welches sonst oft nachteiliger Weise von der Ausrichtung mit der Belastung übereinstimmt. Bei einer geeigneten Querschnittsform, beispielsweise rechteckig, können die nahezu parallele Faserstränge, wie beim Wickeln üblich, aufeinander abgelegt und durch Harz stellenweise miteinander verklebt werden. Eine geeignete Querschnittsform kann auch eine Form sein, die eine Verbindung zwischen nahezu parallelen Strängen durch mechanische Interaktionen begünstigt. Die Erfindung kann Leichtbau-Strukturbauteile betreffen. Es ist möglich, solche Komponenten als kernlos gewickelte Stabtragwerke auszugestalten. Es können eine hohe Oberflächenqualität sowie ein definierter Querschnitt der Stränge erzielt werden. Anwendungen können Verbindungselemente und hauptsächlich auf Zug und Biegung belastete Stabtragwerke sein.

Folgende weitere Vorteile können erreicht werden: keine Kosten für Formwerkzeuge oder Vakuum-Heizpressen; integrale Bauweise und weniger Verbindungselemente; Wickelcharakter (gitterartige Struktur, hohe Massen-spezifische Kennwerte, 3D-Gestaltungsfreiheit) von Komponenten bleibt erhalten; Umlenkung des Verbundprofilstrangs an bereits ausgehärten Strangabschnitten ist möglich; glatte Oberfläche mit definiertem Querschnitt; rechnerische Bestimmung des Faservolumengehaltes ist aufgrund der Aushärtung im Werkzeug möglich; gehärtete Bereiche (ersten Strangabschnitte) zwischen Wickelpunkten beginnen nicht nach dem Wickeln durchzuhängen; kein Abtropfen von Matrixmaterial im freispannenden Bereich und kaum Abtropfen an den Umlenkungsbereichen während des Wickelns, da bereits Teile des Verbundprofilstrangs gehärtet sind; weniger Nachbearbeitungsaufwand; höhere Druckfestigkeit, da der Strangquerschnitt runder ist; Faservolumengehalt kann erhöht sein, da der Verbundprofilstrang nicht mit überschüssigem Harz zusammengeklebt werden muss.

Nachfolgend werden Ausführungsbeispiele der Erfindung unter Bezugnahme auf Figuren näher beschrieben, dabei zeigen schematisch und beispielhaft:
- Fig. 1: ein Herstellen einer Faser-Matrix-Verbund-Profil-Struktur mithilfe einer Werkzeuganordnung mit zwei Werkzeugmodulen,
- Fig. 2: eine Trajektorie zum Abziehen und Umlenken eines Verbundprofilstrangs mit Strangabschnitten mit ausgehärtetem Matrixmaterial und Strangabschnitten mit unvollständig ausgehärtetem Matrixmaterial und
- Fig. 3: einen umgelenkten Strangabschnitt eines Verbundprofilstrangs mit unvollständig ausgehärtetem Matrixmaterial an einem Umlenkabschnitt eines Werkzeugmoduls mit Querschnitten des umgelenkten Strangabschnitts.

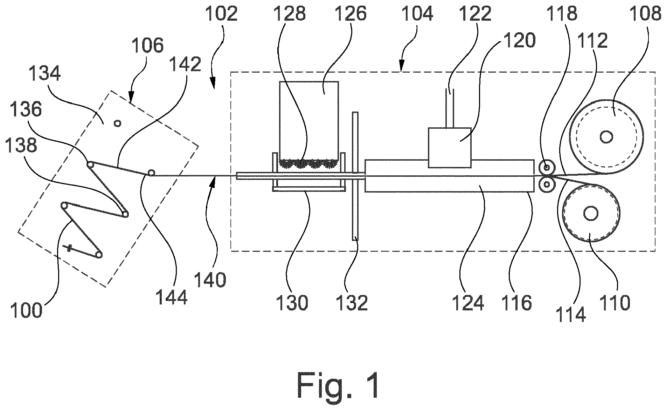

Fig. 1 zeigt ein Herstellen einer Faser-Matrix-Verbund-Profil-Struktur 100 mithilfe einer Werkzeuganordnung 102 mit zwei Werkzeugmodulen 104, 106.

Das erste Werkzeugmodul 104 weist einen Materialspeicher 108 für trockene Verstärkungsfasern 112, einen Materialspeicher 110 für ein faserartiges Zusatzelement 114, einer Imprägnierungskammer 116, eine Zuführvorrichtung 118 zum Zuführen der Verstärkungsfasern 112 und des Zusatzelements 114 zu der Imprägnierungskammer 116, eine Mischvorrichtung 120 für Matrixmaterial 124, eine Zuführvorrichtung 122 zum Zuführen von Matrixmaterial 124 zu der Imprägnierungskammer 116, eine Strahlungsquelle 126 für Strahlung 128, eine Reflektorvorrichtung 130 und eine Abschattungsvorrichtung 132 auf.

Das zweite Werkzeugmodul 106 weist einen plattenförmigen Basisabschnitt 134 und stift- oder hülsenförmige Umlenkabschnitte, wie 136, 138, auf.

Das erste Werkzeugmodul 104 und das zweite Werkzeugmodul 106 sind relativ zueinander bewegbar, um einen Verbundprofilstrang 140 von dem ersten Werkzeugmodul 104 abzuziehen und an dem zweiten Werkzeugmodul 106 zu wickeln. Beispielsweise ist das erste Werkzeugmodul 104 mithilfe eines Roboters bewegbar und das zweite Werkzeugmodul 106 stationär.

Zum Herstellen der Faser-Matrix-Verbund-Profil-Struktur 100 werden zunächst die Verstärkungsfasern 112, 114 in der Imprägnierungskammer 116 mit Matrixmaterial 124 imprägniert. Nachfolgend wird mithilfe der UV-Strahlung 128 das Matrixmaterial 124 abschnittsweise ausgehärtet, sodass der Verbundprofilstrang 140 erstes Strangabschnitte 142 mit ausgehärtetem Matrixmaterial 124 und zweite Strangabschnitte 144 mit unvollständig ausgehärtetem Matrixmaterial 124 aufweist. Dabei unterstützt die Reflektorvorrichtung 130 eine Beaufschlagung des Verbundprofilstrangs 140 mit UV-Strahlung 128 und die Abschattungsvorrichtung 132 verhindert ein Eindringen von UV-Strahlung 128 in die Imprägnierungskammer 116. Nachfolgend wird der Verbundprofilstrang 140 an den Umlenkabschnitten 136, 138 des zweiten Werkzeugmoduls 106 gewickelt.

Das abschnittsweise Aushärten des Matrixmaterials 124 und damit Abmessung und Anordnung der ersten Strangabschnitte 142 und der zweiten Strangabschnitte 144 einerseits und die Anordnung der Umlenkabschnitte 136, 138 andererseits sind derart aufeinander abgestimmt, dass die ersten Strangabschnitte 142 als gerade zwischen den Umlenkabschnitten 136, 138 verlaufen und die zweiten Strangabschnitte 144 an den Umlenkabschnitten 136, 138 zur Anordnung kommen.

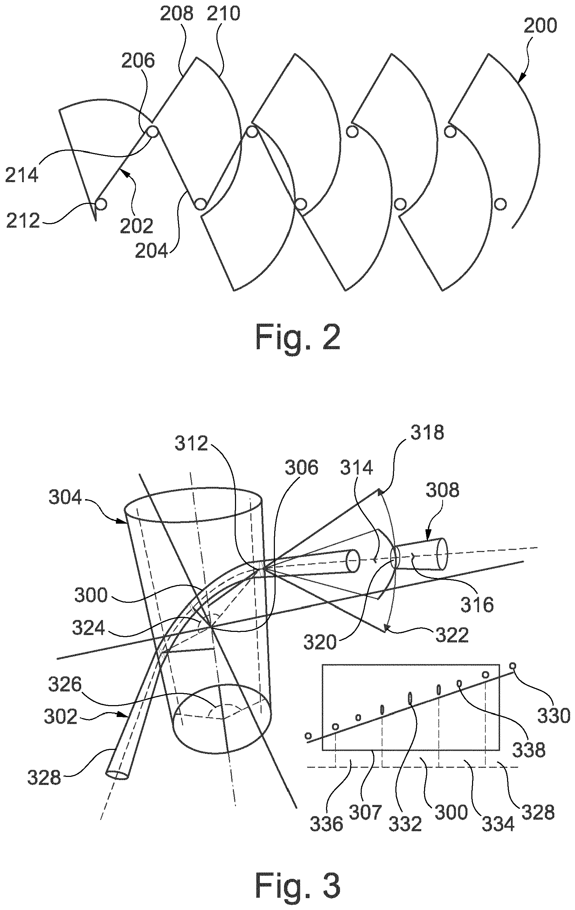

Fig. 2 zeigt eine Trajektorie 200 zum Abziehen und Umlenken eines Verbundprofilstrangs 202 mit ersten Strangabschnitten 204 mit ausgehärtetem Matrixmaterial und zweiten Strangabschnitten 206 mit unvollständig ausgehärtetem Matrixmaterial.

Beim Abziehen und Umlenken werden das erste Werkzeugmodul und das zweite Werkzeugmodul stets auf den letzten Wickelpunkt ausgerichtet, also genau auf den Mittelpunkt des Verbundprofilstrangquerschnitts, welcher orthogonal zur Abzugsrichtung im letzten Kontaktpunkt liegt (vTCPₙ₋₁). Die relative Bewegung zwischen erstem Werkzeugmodul und zweitem Werkzeugmodul besteht aus einer mehr oder weniger geglätteten Superposition einzelner Bewegungen bzw. Trajektorienabschnitte.

Zum einen gibt es einen überwiegend geraden Trajektorienabschnitt, wie 208, welcher dazu dient, den Verbundprofilstrang 202 aus dem ersten Werkzeugmodul abzuziehen. Diese Bewegung findet entlang des Strahles im mathematischen Sinne statt, welcher im oben genannten Mittelpunkt beginnt und durch den TCP verläuft. Zum anderen gibt es einen überwiegend gekrümmten Trajektorienabschnitt, wie 210, welcher eine Rotation dieses Strahles um seinen Startpunkt beschreibt. Durch eine Abfolge von beiden Trajektorienabschnitte 208, 210, welche auch teilweise stattfinden können, ist jede Trajektorie 200 beschreibbar. Um die Spannung auf dem Verbundprofilstrang 202 zu erhalten, soll eine Annäherung des TCPs an den Ursprung des Strahles vermieden werden.

Die Einführung des Begriffes "virtueller TCP" (vTCP), also der Punkt, bei dem der nächste Kontakt zwischen gegenwärtig abgelegten Verbundprofilstrang 202 und einem Umlenkabschnitt, wie 212, 214, des zweiten Werkzeugmoduls oder einem Kreuzungspunkt des Verbundprofilstrangs 202 stattfinden wird, hilft bei der Planung der Positionen der ersten Strangabschnitte 204. Zudem ist dieser Punkt entlang des Verbundprofilstrangs 202 der, welchen man im Blickfeld behalten kann, um den Prozess zu überwachen. Der vTCPₙ₋₁ ist der vorherige vTCP, also der an der Stelle des letzten Kontaktes.

Beim kernlosen Wickeln findet typischerweise an jedem Kontakt, also an jedem virtuellen TCP, eine Umlenkung statt, sodass hierbei die zweiten Strangabschnitte 206 um die virtuellen TCPs herum liegen. Die Länge der zweiten Strangabschnitte 206 richtet sich nach der benötigten Länge des Verbundprofilstrangs 202 im Umschlingungsbereich. Befindet sich bereits ein abgelegter Verbundprofilstrang 202 an einem Umlenkabschnitt 212, 214 oder wird ein Umlenkabschnitt 212, 214 mehrmals umschlungen, so ist der zweite Strangabschnitt 206 entsprechend länger. Da der Übergang zwischen erstem Strangabschnitt 204 und zweitem Strangabschnitt 206 keinem digitalen Stufensprung entspricht, sondern einen Gradienten aufweist, kann dieser so positioniert werden, dass er beginnt bzw. endet am letzten bzw. ersten Kontaktpunkt zwischen Verbundprofilstrang 202 und Umlenkabschnitt 212, 214 oder der Gradient reicht bis in dem Umlenkungsbereich hinein. Alternativ und am einfachsten zu fertigen, ist es jedoch, wenn der Gradient erst in dem freigespannten Bereich zwischen zwei Umlenkabschnitten beginnt. Der Gradient wird durch die Länge der Bestrahlungszone und des Werkzeugs, die Abschattung und die Lichtweiterleitung im Material sowie die thermischen Verhältnisse im Werkzeug/Umgebung bestimmt.

Im Übrigen wird ergänzend insbesondere auf Fig. 1 und die zugehörige Beschreibung verwiesen.

Fig. 3 zeigt einen umgelenkten zweiten Strangabschnitt 300 eines Verbundprofilstrangs 302 mit zunächst unvollständig ausgehärtetem Matrixmaterial an einer Oberfläche eines Umlenkabschnitts 304 eines zweiten Werkzeugmoduls mit Querschnitten 330, 332, 338 des umgelenkten zweiten Strangabschnitts 300.

Ersichtlich sind ein Wickelpunkt 306, eine Mantelfläche 307 des Umlenkabschnitts 304, ein Endstück 308 des ersten Werkzeugmoduls, den abgelegten Verbundprofilstrang 302, vTCPₙ₋₁ 312, eine Translationsbewegung 314 des zweiten Werkzeugmoduls in Abzugsrichtung (bewirkt: Spannungsanstieg im Fasermaterial), eine Translationsbewegung 316 des zweiten Werkzeugmoduls entgegen der Abzugsrichtung (bewirkt: Spannungsabfall im Fasermaterial), eine Rotation 318 des TCPs 320 um vTCPₙ₋₁ 312 nach oben/unten, ohne Spannungsveränderung, eine Rotation 322 des TCP 320s um vTCPₙ₋₁ 312 seitlich, ohne Spannungsveränderung, den TCP 320, einen Umschlingungswinkel 324, eine Projektion 326 des Umschlingungswinkels 324 auf eine z-Ebene, entsprechend einem Umschlingungswinkel 324 bei rein horizontaler Bewicklung des Umlenkabschnitts 304. Wenn die Projektion 326 des Umschlingungswinkels 324 und der Umschlingungswinkel 324 gleich groß sind, wird das Umlenkelement 304 eben umwickelt.

Der Verbundprofilstrang 302 weist an dem ersten Strangabschnitt 328 einen kreisförmigen Querschnitt, wie 330 auf. An dem zweiten Strangabschnitt 300 weist der Verbundprofilstrang 302 einen verformten, annäherungsweise ellipsenförmigen Querschnitt, wie 332, auf. In einem Übergangsbereich, wie 334, weist der Verbundprofilstrang 302 einen Gradienten mit entsprechendem Querschnitt, wie 338, auf.

Im Übrigen wird ergänzend insbesondere auf Fig. 1 und Fig. 2 sowie die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

### Bezugszeichen

- 100: Faser-Matrix-Verbund-Profil-Struktur
- 102: Werkzeuganordnung
- 104: erstes Werkzeugmodul
- 106: zweites Werkzeugmodul
- 108: Materialspeicher
- 110: Materialspeicher
- 112: Verstärkungsfasern
- 114: Zusatzelement
- 116: Imprägnierungskammer
- 118: Zuführvorrichtung
- 120: Mischvorrichtung
- 122: Zuführvorrichtung
- 124: Matrixmaterial
- 126: Strahlungsquelle
- 128: Strahlung
- 130: Reflektorvorrichtung
- 132: Abschattungsvorrichtung
- 134: Basisabschnitt
- 136: Umlenkabschnitt
- 138: Umlenkabschnitt
- 140: Verbundprofilstrang
- 142: erster Strangabschnitt
- 144: zweiter Strangabschnitt

- 200: Trajektorie
- 202: Verbundprofilstrang
- 204: erster Strangabschnitt
- 206: zweiter Strangabschnitt
- 208: Trajektorienabschnitt
- 210: Trajektorienabschnitt
- 212: Umlenkabschnitt
- 214: Umlenkabschnitt

- 300: zweiter Strangabschnitt
- 302: Verbundprofilstrang
- 304: Umlenkabschnitt
- 306: Wickelpunkt
- 307: Mantelfläche
- 308: Endstück
- 312: vTCPn-1, Kontaktpunkt
- 314: Translationsbewegung, Austrittsachse
- 316: Translationsbewegung, Austrittsachse
- 318: Rotation
- 320: TCP
- 322: Rotation
- 324: Umschlingungswinkel
- 326: Projektion
- 328: erster Strangabschnitt
- 330: Querschnitt
- 332: Querschnitt
- 334: Übergangsbereich
- 336: Übergangsbereich
- 338: Querschnitt

## Patentansprüche

1. Verfahren zum Herstellen einer Faser-Matrix-Verbund-Profil-Struktur (100) mithilfe eines ersten Werkzeugmoduls (104) mit wenigstens einer Formvorrichtung und eines zweiten Werkzeugmoduls (106) mit wenigstens einem Umlenkabschnitt (136, 138, 212, 214, 304) mit einem Kontaktpunkt (312), wobei in einem ersten Schritt ein Verbundprofilstrang (140, 202, 302) aus Verstärkungsfasern (112, 114) und Matrixmaterial (124) hergestellt wird, wobei der Verbundprofilstrang (140, 202, 302) wenigstens einen ersten Strangabschnitt (142, 204, 328) mit ausgehärtetem Matrixmaterial und wenigstens einen zweiten Strangabschnitt (144, 206, 300) mit unausgehärtetem, unvollständig ausgehärtetem und/oder nur oberflächlich ausgehärtetem Matrixmaterial (124) aufweist und in einem zweiten Schritt der zweite Strangabschnitt (144, 206, 300) des Verbundprofilstrangs (140, 202, 302) an dem Kontaktpunkt (312) des zweiten Werkzeugmoduls (106) umgelenkt wird, wobei der erste Schritt und der zweite Schritt synchronisiert durchgeführt werden, und in einem dritten Schritt das Matrixmaterial (124) des wenigstens einen zweiten Strangabschnitts ausgehärtet wird, während der Verbundprofilstrang (140, 202, 302) an dem zweiten Werkzeugmodul (106) fixiert ist.

2. Verfahren nach Anspruch 1, **dadurch gekennzeichnet, dass** das Verfahren mithilfe eines ersten Werkzeugmoduls (104) und eines zweiten Werkzeugmoduls (106) durchgeführt wird, wobei das erste Werkzeugmodul (104) und das zweite Werkzeugmodul (106) relativ zueinander bewegt werden.

3. Verfahren nach Anspruch 2, **dadurch gekennzeichnet, dass** das erste Werkzeugmodul (104) und/oder das zweite Werkzeugmodul (106) entlang einer vorgegebenen Trajektorie (200) bewegt werden/wird.

4. Verfahren nach Anspruch 3, **dadurch gekennzeichnet, dass** die Trajektorie (200) wenigstens einen ersten Trajektorienabschnitt (208) und wenigstens einen zweiten Trajektorienabschnitt (210) aufweist.

5. Verfahren nach Anspruch 4, **dadurch gekennzeichnet, dass** der wenigstens eine erste Trajektorienabschnitt (208) zumindest annähernd gerade und der wenigstens eine zweite Trajektorienabschnitt (210) zumindest annähernd gekrümmt ist.

6. Verfahren nach wenigstens einem der Ansprüche 4 bis 5, **dadurch gekennzeichnet, dass** der wenigstens eine erste Trajektorienabschnitt (208) und der wenigstens eine zweite Trajektorienabschnitt (210) ineinander übergehen und/oder gleichzeitig durchgeführt werden.

7. Verfahren nach wenigstens einem der Ansprüche 2 bis 6, **dadurch gekennzeichnet, dass** in dem ersten Schritt der Verbundprofilstrang (140, 202, 302) entlang einer Austrittsachse (314, 316) aus dem ersten Werkzeugmodul (104) austritt, in dem zweiten Schritt der Verbundprofilstrang (140, 202, 302) an einem Kontaktpunkt (306) des zweiten Werkzeugmoduls (106) in dem wenigstens einen zweiten Strangabschnitt (144, 206, 300) umgelenkt wird und während dem Durchführen des ersten Schritts und/oder des zweiten Schritts die Austrittsachse (314, 316) und der Kontaktpunkt (306) zumindest annähernd in Übereinstimmung gehalten werden und/oder der letzte Kontaktpunkt (312) und der Tool-Center-Point (320) einander nicht angenähert werden.

8. Verfahren nach wenigstens einem der Ansprüche 2 bis 7, **dadurch gekennzeichnet, dass** das erste Werkzeugmodul (104) und/oder das zweite Werkzeugmodul (106) mithilfe eines Roboters bewegt werden/wird.

9. Verfahren nach wenigstens einem der Ansprüche 1 bis 8, **dadurch gekennzeichnet, dass** während dem Durchführen des ersten Schritts dem Verbundprofilstrang (140, 202, 302) wenigsten ein faserartiges Zusatzelement zugeführt wird.

10. Werkzeuganordnung (102) zum Herstellen einer Faser-Matrix-Verbund-Profil-Struktur (100) gemäß einem Verfahren nach wenigstens einem der Ansprüche 1 bis 9, wobei die Werkzeuganordnung (102) ein erstes Werkzeugmodul (104) zum Herstellen des Verbundprofilstrangs (140, 202, 302) und ein zweites Werkzeugmodul (106) zum Umlenken des Verbundprofilstrangs (140, 202, 302) aufweist, wobei das erste Werkzeugmodul (104) und das zweite Werkzeugmodul (106) synchronisiert relativ zueinander bewegbar sind.

11. Werkzeuganordnung (102) nach Anspruch 10, **dadurch gekennzeichnet, dass** die Werkzeuganordnung (102) wenigstens einen Roboter zum Bewegen des ersten Werkzeugmodul (104) und/oder des zweiten Werkzeugmoduls (106) aufweist.

12. Werkzeuganordnung (102) nach wenigstens einem der Ansprüche 10 bis 11, **dadurch gekennzeichnet, dass** das erste Werkzeugmodul (104) eine Aushärtevorrichtung zum abschnittsweisen Aushärten von Matrixmaterial (124) aufweist.

13. Werkzeuganordnung nach Anspruch 12, **dadurch gekennzeichnet, dass** die Aushärtevorrichtung wenigstens eine Strahlungsquelle, insbesondere eine UV-Strahlungsquelle (126) oder Wärmestrahlungsquelle, aufweist.

## Claims

1. A method of manufacturing a fiber-matrix composite profile structure (100) using a first tool module (104) with at least one forming device and a second tool module (106) with at least one deflection section (136, 138, 212, 214, 304) with a contact point (312), wherein in a first step a composite profile strand (140, 202, 302) is manufactured from reinforcing fibers (112, 114) and matrix material (124), wherein the composite profile strand (140, 202, 302) has at least a first Strand section (142, 204, 328) with cured matrix material and has at least one second strand section (144, 206, 300) with uncured, incompletely cured and/or only superficially cured matrix material (124), and in a second step the second strand section (144, 206, 300) of the composite profile strand (140, 202, 302) is deflected at the contact point (312) of the second tool module (106), wherein the first step and the second step are performed in synchronization, and in a third step the matrix material (124) of the at least one second strand portion is cured while the composite profile strand (140, 202, 302) is fixed to the second tool module (106).

2. Method according to claim 1, **characterized in that** the method is carried out with the aid of a firsttool module (104) and a second tool module (106), wherein the first tool module
(104) and the second tool module (106) are moved relative to each other.

3. Method according to claim 2, **characterized in that** the firsttool module (104) and/or the second tool module (106) is/are moved along a predetermined trajectory (200).

4. Method according to claim 3, **characterized in that** the trajectory (200) has at least one first trajectory section (208) and at least one second trajectory section (210).

5. Method according to claim 4, **characterized in that** the at least one first trajectory section (208) is at least approximately straight and the at least one second trajectory section (210) is at least approximately curved.

6. Method according to at least one of claims 4 to 5, **characterized in that** the at least one first trajectory section (208) and the at least one second trajectory section (210) merge into each other and/or are carried out simultaneously.

7. Method according to at least one of claims 2 to 6, **characterized in that**, in the first step, the composite profile strand (140, 202, 302) is removed from the first tool module along an exit axis (314, 316). (104) exits, in the second step the composite profile strand (140, 202, 302) is deflected at a contact point (306) of the second tool module (106) in the at least one second strand section (144, 206, 300) and during the performance of the first step and/or the second step the exit axis (314, 316) and the contact point (306) are kept at least approximately in alignment and/or the last contact point (312) and the tool center point (320) are not brought closer to each other.

8. Method according to at least one of claims 2 to 7, **characterized in that** the first tool module (104) and/or the second tool module (106) is/are moved with the aid of a robot.

9. Method according to at least one of claims 1 to 8, **characterized in that** at least one fiber-like additional element is fed to the composite profile strand (140, 202, 302) during the performance of the first step.

10. A tool assembly (102) for producing a fiber-matrix composite profile structure (100) according to a method according to at least one of claims 1 to 9, wherein the tool assembly (102) comprises a first tool module (104) for producing the composite profile strand (140, 202, 302) and a second tool module (106) for deflecting the composite profile strand (140, 202, 302), wherein the first tool module (104) and the second tool module (106) are movable synchronized relative to each other.

11. Tool arrangement (102) according to claim 10, **characterized in that** the tool arrangement (102) comprises at least one robot for moving the first tool module (104) and/or the second tool module (106).

12. Tool assembly (102) according to at least one of claims 10 to 11, **characterized in that** the first tool module (104) comprises a curing device for curing matrix material (124) in sections.

13. Tool arrangement according to claim 12, **characterized in that** the curing device has at least one radiation source, in particular a UV radiation source (126) or heat radiation source.

## Revendications

1. Procédé de fabrication d'une structure de profilé composite à fibres et matrice (100) à l'aide d'un premier module d'outillage (104) comprenant au moins un dispositif de moulage et d'un deuxième module d'outillage (106) comprenant au moins une section de renvoi (136, 138, 212, 214, 304) avec un point de contact (312), dans lequel, dans une première étape, un cordon de profilé composite (140, 202, 302) est fabriqué à partir de fibres de renforcement (112, 114) et de matériau de matrice (124), dans lequel
le profilé composite (140, 202, 302) comporte au moins un premier élément de liaison (140, 202, 302) et un deuxième élément de liaison (202, 302). section de brin (142, 204, 328) avec matériau de matrice durci et
au moins une deuxième section de brin (144, 206, 300) avec un matériau de matrice (124) non durci, incomplètement durci et/ou durci seulement en surface et, dans une deuxième étape, la deuxième section de brin (144, 206, 300) du brin profilé composite (140, 202, 302) est déviée au point de contact (312) du deuxième module d'outillage (106), dans lequel la première étape et la deuxième étape sont exécutées de manière synchronisée, et dans une troisième étape, le matériau de matrice (124) de la au moins une deuxième section de brin est durci pendant que le brin profilé composite (140, 202, 302) est fixé au deuxième module d'outillage (106).

2. Procédé selon la revendication 1, **caractérisé en ce que** le procédé est mis en oeuvre à l'aide d'un premier module d'outillage (104) et d'un second module d'outillage (106), le premier module d'outillage (104) étant conçu pour être utilisé dans le cadre d'un processus de fabrication.
(104) et le deuxième module d'outil (106) sont déplacés l'un par rapport à l'autre.

3. Procédé selon la revendication 2, **caractérisé en ce que** le premier module d'outil (104) et/ou le deuxième module d'outil (106) est/sont déplacé(s) le long d'une trajectoire prédéterminée (200).

4. Procédé selon la revendication 3, **caractérisé en ce que** la trajectoire (200) comprend au moins un premier segment de trajectoire (208) et au moins un deuxième segment de trajectoire (210).

5. Procédé selon la revendication 4, **caractérisé en ce que** ledit au moins un premier segment de trajectoire (208) est au moins approximativement droit et ledit au moins un deuxième segment de trajectoire (210) est au moins approximativement incurvé.

6. Procédé selon au moins l'une des revendications 4 à 5, **caractérisé en ce que** ladite au moins une première portion de trajectoire (208) et ladite au moins une deuxième portion de trajectoire (210) se confondent et/ou sont réalisées simultanément.

7. Procédé selon au moins l'une des revendications 2 à 6, **caractérisé en ce que**, lors de la première étape, le boudin de profilé composite (140, 202, 302) sort du premier module d'outillage selon un axe de sortie (314, 316).
(104), dans la deuxième étape, le cordon de profilé composite (140, 202, 302) est dévié au niveau d'un point de contact (306) du deuxième module d'outillage (106) dans la au moins une deuxième section de cordon (144, 206, 300) et, pendant l'exécution de la première étape et/ou de la deuxième étape, l'axe de sortie (314, 316) et le point de contact (306) sont maintenus au moins approximativement en correspondance et/ou le dernier point de contact (312) et le point de centre d'outillage (320) ne sont pas rapprochés l'un de l'autre.

8. Procédé selon au moins l'une des revendications 2 à 7, **caractérisé en ce que** le premier module d'outil (104) et/ou le deuxième module d'outil (106) sont/est déplacé(s) à l'aide d'un robot.

9. Procédé selon au moins l'une des revendications 1 à 8, **caractérisé en ce que**, pendant la mise en oeuvre de la première étape, on fournit au moins un élément additionnel fibreux au profilé composite (140, 202, 302).

10. Ensemble d'outils (102) pour la fabrication d'une structure de profilé composite à matrice de fibres (100) selon un procédé selon au moins l'une des revendications 1 à 9, l'ensemble d'outils (102) comprenant un premier module d'outils (104) pour la fabrication du cordon de profilé composite (140, 202, 302) et un deuxième module d'outils (106) pour la déviation du cordon de profilé composite (140, 202, 302), le premier module d'outils (104) et le deuxième module d'outils (106) étant mobiles de manière synchronisée l'un par rapport à l'autre.

11. Ensemble d'outils (102) selon la revendication 10, **caractérisé en ce que** l'ensemble d'outils (102) comprend au moins un robot pour déplacer le premier module d'outils (104) et/ou le deuxième module d'outils (106).

12. Ensemble d'outils (102) selon au moins l'une des revendications 10 à 11, **caractérisé en ce que** le premier module d'outils (104) présente un dispositif de durcissement pour le durcissement par sections du matériau de matrice (124).

13. Ensemble d'outils selon la revendication 12, **caractérisé en ce que** le dispositif de durcissement comprend au moins une source de rayonnement, en particulier une source de rayonnement UV (126) ou une source de rayonnement thermique.
